# EUROPEAN PATENT APPLICATION

(11) **EP 4 322 062 A1**
(43) Date of publication of application: **14.02.2024**
(21) Application number: 22189643.4
(22) Date of filing: 10.08.2022
(51) Int. Cl.: G06N 3/0464

(54) **METHOD FOR AUTOMATED MONITORING OF A DEEP NEURAL NETWORK, COMPUTING SYSTEM AND VEHICLE**

(71) Applicant: Continental Automotive Technologies GmbH, 30165 Hannover (DE)
(72) Inventor: Mendoza Gallegos, Dario, 90411 Nürnberg (DE); Schwalbe, Gesina, 90411 Nürnberg (DE)
(74) Representative: Continental Corporation

(57) **Abstract**

The invention relates to a method (1) for automated monitoring of a deep neural network (2). The deep neural network (2) takes input data (3) and generates output data, wherein the output data comprising class membership output scores (4) for the input data (3). A trained deep neural network (2) that provides class membership output scores (4) corresponding to a plurality of classes for input data (3) is provided. For each of the classes, a class reference information flow graph (5) is generated. Current input data (6) is provided and a current class membership output score (7) is provided for the current input data (6) with the trained deep neural network (2). Then, a current information flow graph (8) is generated based on neural activation values of the deep neural network (2) when providing the current class membership output score (7) for the current input data (6). The class reference information flow graph (5) for the class corresponding to the current class membership output score (7) is obtained and the current information flow graph (8) is compared to the class reference information flow graph (5) for the class corresponding to the current class membership output score (7). Finally, a plausibility of the current class membership output score (7) is assessed based on the results of the comparison. Further, the invention relates to a corresponding computing system and to a vehicle comprising said computing system.

## Description

### TECHNICAL FIELD

The invention relates to a method for automated monitoring of a deep neural network, to a computing system for automated monitoring of a deep neural network and to a vehicle comprising said computing system.

### BACKGROUND

Automated vehicles often employ a perception-planning action pipeline, which may be provided by a perception module, a path planning module and a motion control module. Here, the perception pipeline is mainly responsible for an accurate detection and classification of objects in the environment, like traffic signs, drivable areas and lanes, other vehicles or pedestrians. Said perception modules for object detection and/or classification from camera images (and other sensors) have safety relevant or safety critical tasks, e.g., if a pedestrian crossing the street is missed by the perception module, the motion control module may eventually not break or avoid the person, leading to a potentially fatal crash. Therefore, in order to avoid accidents and liability issues, safe functioning of the safety critical perception modules has to be ensured.

Due to the complexity of real-world image inputs, perception functions are typically implemented using machine learned computational models like deep neural networks (DNNs), the safe functioning of which also has to be ensured. Examples of approaches for online monitoring of a DNN with respect to semantic properties are feature attribution, concept activation vectors, and information flow visualization.

In feature attribution, features (parts) of the input image that were specifically important for a certain output, e.g., a class, are found and highlighted. However, the existing feature attribution methods require one or several (re-)evaluations by the DNN and attribution information can only be used to monitor very simple logical constraints.

Regarding concept activation vectors, there exist several techniques to associate concepts with vectors in the intermediate output space of DNN layers. Such vectors can be used to verify the internal representations of DNNs with respect to relations between those concepts. This, however, either relies on attribution mechanisms or considers only concept vectors residing in a single layer.

An example of a method to directly approximate the information flow graph of a convolutional DNN is SUMMIT (F. Hohman et al., "Summit: Scaling Deep Learning Interpretability by Visualizing Activation and Attribution Summarizations", 2020). SUMMIT aims for an interactive visualization of DNNs that summarizes what features a deep learning model has learned and how those features interact with each other in a simplified computational graph to form the final predictions. To enable the user to understand the learned features, example-based visualizations of the found encoded features are used. However, the provided simplified graphs and visualizations do not consider any runtime monitoring applications, but only the approximate information flow graph.

Further, design measures on system level are inevitable to cope with yet unknown systematic errors of DNNs that are expected to occur in real life situations: Redundancy will be very costly since DNNs require a lot of memory, and an immense number of FLOPs. Also, it is not clear how to choose sibling models to ensure they do not share systematic errors - choosing two DNNs may result in both being prone to the same adversarial attacks. Also, input filtering is not guaranteed to prevent all erroneous outputs, as the exact causes of different systematic errors are unknown.

Existing monitors are limited with respect to application to DNNs in automated driving in one or several of the following points: First, typical DNN monitoring methods are not automated. However, automation is needed as the presence or full attention of a driver is not guaranteed. Second, they are computationally expensive as, e.g., several evaluations of the DNN are required. This infringes efficient operation in real-time. Third, they are not manually verifiable. However, the monitor should be manually verifiable to ease the safety assessment of the new monitor system component. This requires a human-readable format of the claims the monitor observes and/or the monitoring results. Fourth, to enable assessment of semantic properties, additional DNN outputs are required. If no concept analysis is used, these need to be trained into the DNN requiring further labels and data, and potentially destabilizing the training. Last, only outputs or parts of the intermediate output are considered, not the full information flow of the DNN. Hence, a substantial amount of the available information on the DNN processing is discarded, which might be valuable to find spurious behaviors.

### SUMMARY

It is therefore an object of the present invention to provide an improved method for automated monitoring of a deep neural network (DNN), in particular to provide interpretable, and thus easy-to-assess, monitoring for computer vision DNNs and to provide a criterion for spurious behavior detection. It is a further object of the present invention to provide a corresponding computing system as well as a vehicle comprising such a computing system.

The object of the present invention is solved by the subject-matter of the independent claims, wherein further embodiments are incorporated in the dependent claims.

According to an aspect of the invention, a method for automated monitoring of a deep neural network is provided. The deep neural network takes input data and generates output data, wherein the output data comprises class membership output scores for the input data. That is, the deep neural network generates a value, in particular out of a continuous distribution, wherein each value indicates membership to a class, e.g., to a semantic class. As an example, for classification networks, this class membership output score could be one of a plurality of class scores. For object detectors and instance segmentation, the class membership output score could be an objectness score associated to an object candidate box. And for semantic segmentation, the class membership output score could be a pixel-wise score.

According to the method, a trained deep neural network is provided. Said deep neural network provides class membership output scores corresponding to a plurality of classes for input data. The class membership output score may also contain location information, e.g., for detected objects within an area or a volume.

For each of the classes, a class reference information flow graph is generated. Said class reference information flow graph may also be called a class reference information flow graph approximation.

The above indicated steps may be performed before actual to-be-processed data is acquired, and the results may be saved, in particular to a non-transient memory.

Then, current input data is provided. Said current input data may be provided by sensors and may be provided at regular time intervals.

Said current input data is used as input for the trained deep neural network and the trained deep neural network provides a current class membership output score based on the current input data.

When the trained deep neural network provides the current class membership output score for the current input, neurons in the deep neural network are activated and the neurons have neural activation values associated to them. Based on said neural activation values, a current information flow graph is generated.

Further, the current class membership output score is used to determine a class and the class reference information flow graph for said class is obtained from the previously generated class reference information flow graphs.

Then, the current information flow graph is compared to the class reference information flow graph for the class corresponding to the current class membership output score. For said comparison, any similarity measure for directed, non-cyclic graphs may be applied.

Finally, based on the results of the comparison, a plausibility of the current class membership output score is assessed. If the current information flow graph leading to the current class membership output score is similar to the class reference information flow graph for the class corresponding to the current class membership output score, the current class membership output score has been reached on a path that is equal to or similar to a verified path, and hence chances are high that the current class membership output score is plausible. If, on the other hand, the current information flow graph is different from the class reference information flow graph for the class corresponding to the current class membership output score, chances are that an artifact has been encountered and that the current class membership output score is invalid.

Hence, the above described method is simple, efficient and automated and provides a higher confidence in the output provided by the deep neural network, in particular when the output provided by the deep neural network is safety-critical.

According to an embodiment, the deep neural network is a convolutional neural network. Then, the current information flow graph is also based on channel activation values taken in the convolutional neural network when the current class membership output score is provided for the current input data.

According to an embodiment, the deep neural network is adapted for computer vision, hence the method assesses the plausibility of the results of the computer vision. In particular, the deep neural network is adapted for image classification, which is important in many areas such as in advanced driver assistance systems or in autonomous driving systems. Here, the assessment of the plausibility of the output of the deep neural network can provide a significant improvement in safety.

According to an embodiment, for each of the classes, the class reference information flow graph is generated by selecting input samples that are classified in said class, feeding the selected input samples to the trained deep neural network and analyzing the neural activation values and/or the channel activation values in the trained deep neural network.

According to an embodiment, the class reference information flow graph is chosen as a sub-graph of a computational tree of the deep neural network that only contains channels with neural activation values and/or channel activation values above a predetermined threshold. In other words, for each class, the class reference information flow graph maps channels and layers to maximum activation values. To generate the class reference information flow graph, the neural activation values and/or channel activation values may first be averaged over the selected input samples and then the threshold values may be applied. Alternatively, the threshold values may be applied first and then an averaging over the selected input samples may be applied.

According to an embodiment, generating the class reference information flow graph further comprises using a standard windowing approach. That is, when there is one graph for a specific class and a specific position of an object in an image, due to translation invariance, the same graph may be used for all possible locations of the object in the image, and this information is used in creating the class reference information flow graph.

According to an embodiment, comparing the current information flow graph with the class reference information flow graph is performed based on the respective weights of nodes and edges of the information flow graphs. In this context, the weights of the edges are weights between the neurons of the deep neural network and the weights of the nodes are the activation values in the activation pattern.

According to an embodiment, in case that a deviation of the current information flow graph from the class reference information flow graph for the class corresponding to the current class membership output score exceeds a predetermined threshold, an alarm is output and/or a back-up method is activated. The alarm may be an acoustical and/or an optical alarm and notifies the user that the plausibility of the current class membership output score is less than indicated by the predetermined threshold. Hence, a user may take the appropriate action that depends on the specific application where the deep neural network is used. In case that the deep neural network is used for automated driving, the user may increase his or her attention and/or take over the control over the vehicle. Additionally, or alternatively, the back-up method may be activated. As an example, said back-up method may be another method to evaluate the input data, e.g., a more robust but less precise method. As another example, the back-up method may be a method for the specific application that does without analyzing the input data, e.g., a method that is based on measurements from other sensors only.

According to an embodiment, the method further comprises generating human-readable node explanations. Said human-readable node explanations may be attributes associated with a node, with a group of nodes or with an entire node layer. For image classification, said attributes may be images or parts of images. Comparing the current information flow graph with the class reference information flow graph is based on the node explanations and is, in particular, performed by a user. Besides assessing the plausibility of the current class membership output score, the user may also use the node explanations along with the information flow graphs to understand why a certain class membership output score has been assigned to specific input data and may get hints how a wrong class membership score, e.g., a wrong classification, could be avoided, e.g., by using additional layers and/or by using additional training samples for the deep neural network.

According to an embodiment, the generation of the node explanations is based on inputs to the deep neural network, intermediate outputs of the deep neural network and final outputs of the deep neural network, wherein the final outputs may be the class membership output scores. For object detection, as an example, the final outputs may comprise object classes along with bounding boxes of said objects.

According to an embodiment, node explanations related to patterns learned by inner layers of the deep neural network are obtained by inputting a random input into the deep neural network. Said random input is then optimized, e.g., by a gradient ascent method, to maximally activate a unit in the inner layers of the deep neural network. In this context, the unit may be a node, a group of nodes, a layer of nodes or a filter. Then, the optimized input is known to activate said unit in the inner layers and the node explanation for said unit may be given by the optimized input.

According to an embodiment, node explanations related to the individual classes are obtained by inputting input samples that belong to a specific class to the trained deep neural network. Then, those neurons and/or layers are determined that get the maximum activation and these neurons and/or layers are classified according to the respective class, i.e., the attribute associated with these neurons and/or layers is the given class. Using this procedure, neurons and/or layers that have more than one attribute may emerge. The number of attributes assigned to a neuron may be limited, e.g., by setting a threshold that must be exceeded by the activation such that the attribute is associated with the neuron, or by limiting the number of attributes to a predetermined number, wherein those attributes are chosen that are most relevant for the final prediction, i.e., yield the maximum activation.

According to another aspect of the invention, a computing system for automated monitoring of a deep neural network is provided. Said computing system comprises a trained deep neural network, wherein the deep neural network provides class membership output scores corresponding to a plurality of classes for input data. The computing system also contains class reference information flow graphs for each of the classes. It is adapted to provide a current class membership score for current input data with the trained deep neural network; to generate a current information flow graph based on neural activation values of the deep neural network when providing the current class membership output score for the current input data; to obtain the class reference information flow graph for the class corresponding to the current class membership output score; to compare the current information flow graph to the class reference information flow graph for the class corresponding to the current class membership output score; and to assess a plausibility of the current class membership output score based on the results of the comparison. Further details and embodiments may be found corresponding to the above description of the method for automated monitoring of a deep neural network. Also, the advantages achieved by said computing system are presented in detail in the above description.

According to an embodiment, the deep neural network is a convolutional neural network and the current information flow graph is further based on channel activation values. For details, please refer to the above description of the method for automated monitoring of a deep neural network.

According to yet another aspect of the invention, a vehicle is provided. Said vehicle comprises a computing system according to the above description. In particular for safety-critical applications in automated driving, like image recognition, a high level of safety can be achieved.

### BRIEF DESCRIPTION OF THE DRAWINGS

These and other aspects of the invention will be apparent from and elucidated further with reference to the embodiments described by way of examples in the following description and with reference to the accompanying drawings, in which
- Figs. 1a and 1b: show a flowchart of an embodiment of a method for automated monitoring of a deep neural network;
- Fig. 2: shows an example of a pattern for a layer;
- Fig. 3: shows an example of a prototype pattern for a neuron;
- Figs. 4a - 4d: show examples of activation regions;
- Fig. 5: shows an example of an activation flow chart; and
- Fig. 6: shows an example of a current information flow graph.

In the figures, elements which correspond to elements already described may have the same reference numerals. Examples, embodiments or optional features, whether indicated as non-limiting or not, are not to be understood as limiting the invention as claimed.

### DESCRIPTION OF EMBODIMENTS

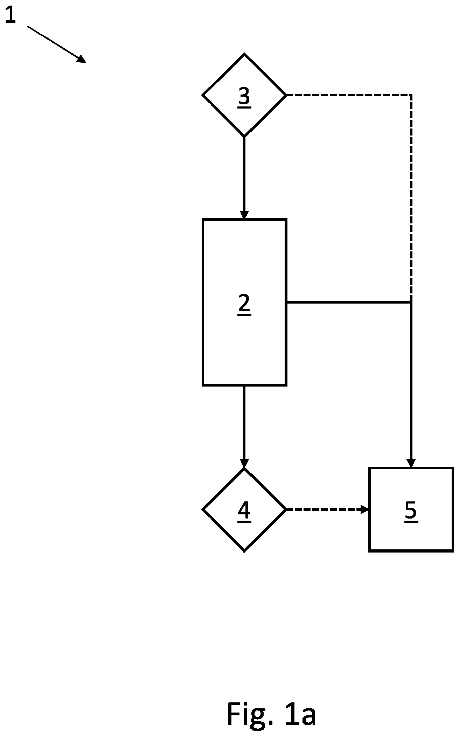

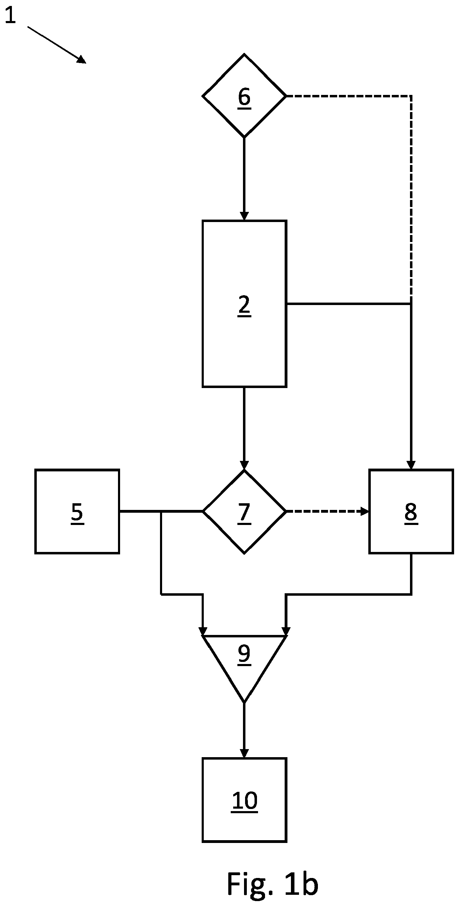

Figures 1a and 1b show flowcharts of a method 1 for automated monitoring of a deep neural network.

In the first part of the method 1 that is shown in Figure 1a, a trained deep neural network 2 is provided. The trained deep neural network 2 processes input data 3 and generates class membership output scores 4 for the input data 3. Said class membership output scores 4 correspond to a plurality of classes into which the input data 3 may be classified.

Training of said deep neural network 2 may have been performed using standard procedures, e.g., feeding a plurality of classified input samples into the deep neural network 2, adjusting weights in the deep neural network 2 based on the provided classification for the input samples and evaluating the performance of the deep neural network 2 with an evaluation set of input samples.

Using the trained deep neural network 2, for each of the classes, a class reference information flow graph 5 is generated. For this, many input samples 3 may be fed to the trained deep neural network 2 and neural activation values and/or channel activation values (if the deep neural network 2 is a convolutional neural network) are analyzed. The input samples 3 and/or the class membership output scores 4 may also be used to generate the class reference information flow graph 5.

The class reference information flow graph 5 may be chosen as a sub-graph of a computational tree of the deep neural network 2 that only contains channels with neural activation values and/or channel activation values above a predetermined threshold.

Further, the class reference information flow graph 5 may be generated using a standard windowing approach in order to take account of different positions of an object in an image.

The second part of the method 1 is shown in Figure 1b. Current input data 6 is provided and fed to the trained deep neural network 2 such that the deep neural network 2 generates a current class membership output score 7. Based on the neural activation values and/or channel activation values of the deep neural network 2 during the generation of current class membership output score 7, a current information flow graph 8 is generated.

Then, the class information flow graph 5 for the class corresponding to the current class membership output score 7 is obtained and the current information flow graph 8 is compared 9 to the class information flow graph 5 for the class corresponding to the current class membership output score 7. Using results 10 of the comparison, a plausibility of the current class membership output score 7 is assessed.

If a deviation of the current information flow graph 8 from the class reference information flow graph 5 for the class corresponding to the current class membership output score 7 exceeds a predetermined threshold, an alarm may be output and/or a back-up method may be activated.

The above described method 1 may be applied, e.g., to deep neural networks 2, in particular to convolutional neural network, that are adapted for computer vision, in particular to image classification and/or object detection. Said computer vision may be used in many fields, for example, for object detection in automated driving systems. In the latter case, a good assessment of the plausibility of the current class membership output score 7 is also very important in terms of safety.

Particularly for deep neural networks 2 related to computer vision, human-readable node explanations may be generated and the current information flow graph 8 may then be compared to the class reference information flow graph 5 for the class corresponding to the current class membership output score 7 based on said node explanations, in particular by a user.

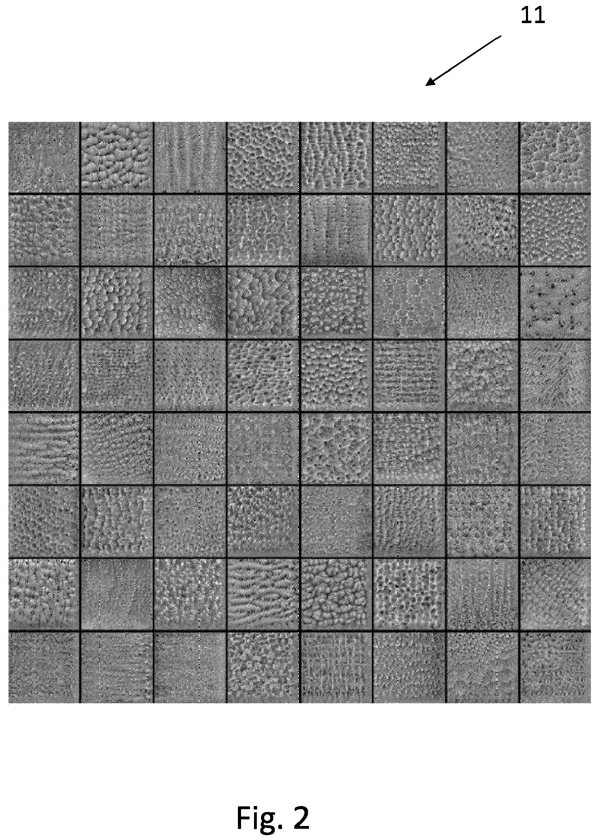

As an example, Figure 2 shows a pattern 11 of most activating single units, e.g., filters, in a convolutional neural network. Each square in this pattern 11 represents a pattern optimized for one filter in a particular layer.

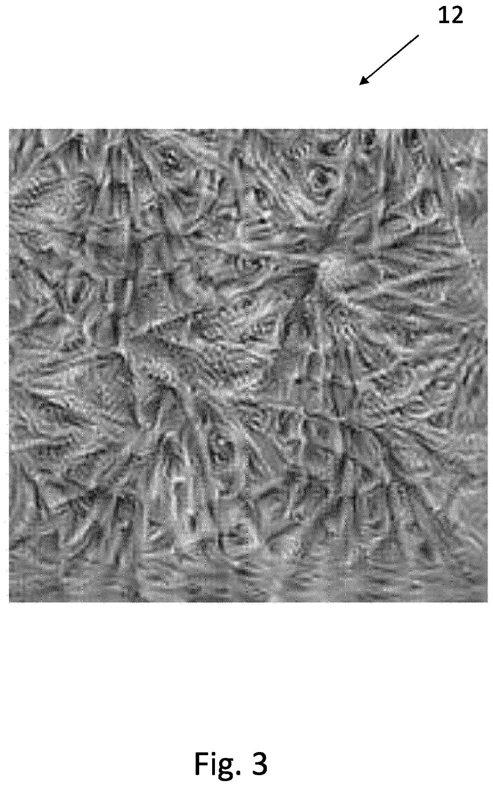

As yet another example, Figure 3 shows a detailed view of a prototype pattern 12 for a single neuron.

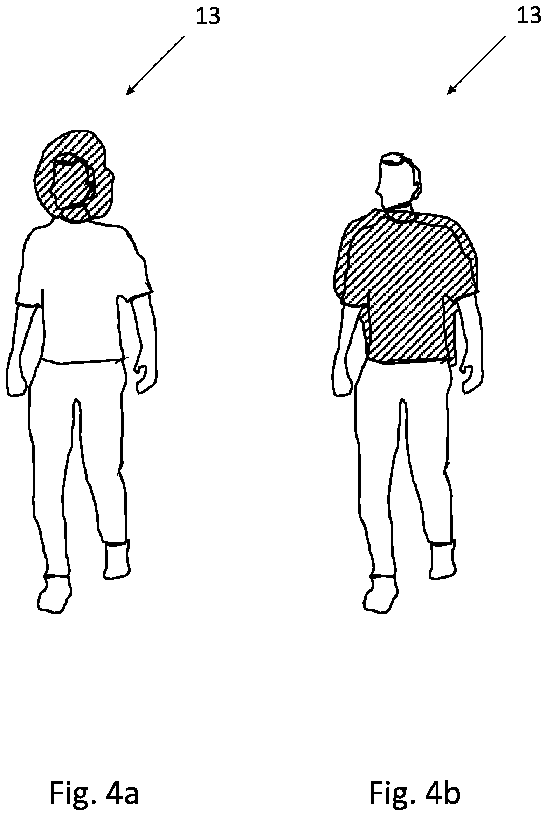

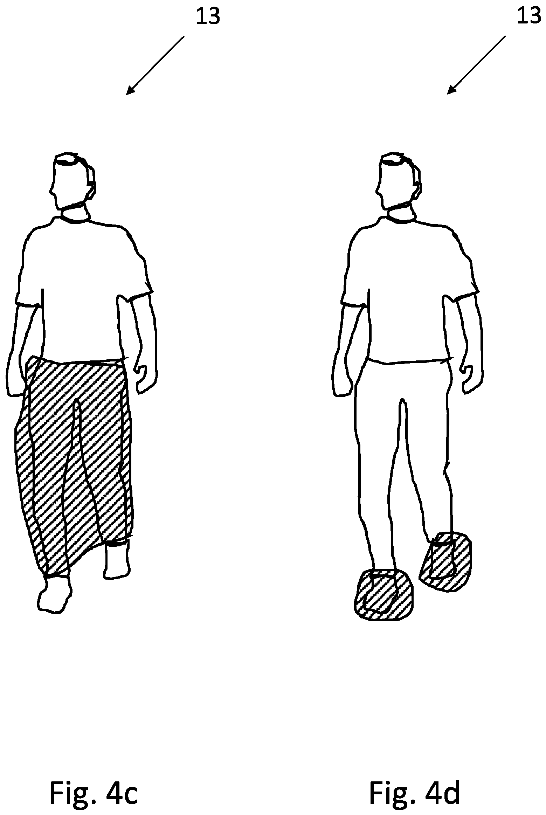

As a further example, Figures 4a - 4d show examples for different activation regions in image recognition of a pedestrian 13. In Figure 4a, the head is recognized, in Figure 4b, the torso is recognized, in Figure 4c, the legs are recognized and in Figure 4d, the feet are recognized.

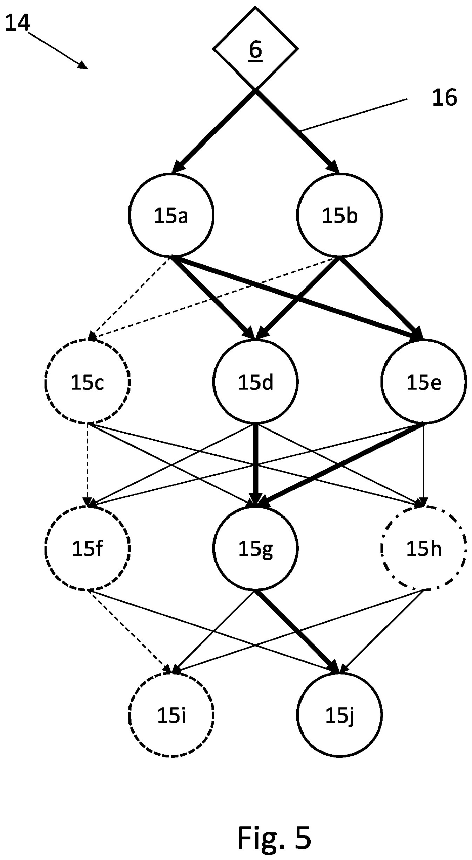

A simplified example of an activation flow chart 14 is shown Figure 5. As an example, current input data 6 resembling a pedestrian 13, as shown, e.g., in Figures 4a - 4d, is used. Nodes 15 of the trained neural network 2 are arranged in layers. Node explanations for the separate nodes 15 have been found as follows: 15a: color; 15b: edges; 15c: wheel; 15d: legs; 15e: feet; 15f: lights; 15g: torso; 15h: tree; 15i: car; and 15j: pedestrian. The nodes 15 that are affiliated with the output class "pedestrian" are shown with a solid circumference, the nodes 15 that are affiliated with the output class "car" are shown with a dashed circumference and the nodes 15 that are affiliated with the output class "tree" are shown with a dash-dotted circumference. The nodes 15 of one layer are connected to the nodes 15 of the next layer by edges 16. Edges 16 with a high weight, which are the edges 16 leading to the correct classification "pedestrian", are shown in bold, whereas edges that would lead to the wrong classification "car" are shown with dashed lines.

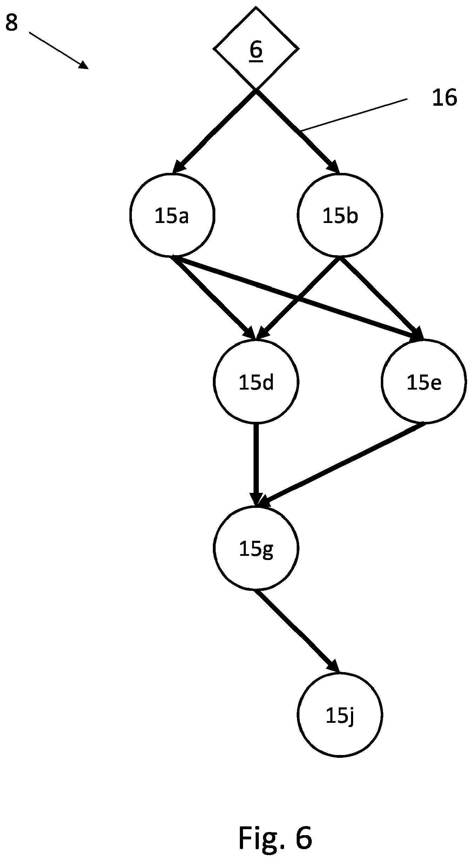

To obtain the current information flow graph 8, only edges 16 and nodes 15 are selected that have a significant contribution to the classification, i.e., that have activation values above a predetermined threshold. An example for a current information flow graph 8 based on the activation flow chart 14 is shown in Figure 6.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### List of reference signs

- 1: method for automated monitoring of a deep neural network
- 2: trained deep neural network
- 3: input data
- 4: class membership output score
- 5: class reference information flow graph
- 6: current input data
- 7: current class membership output score
- 8: current information flow graph
- 9: comparison
- 10: result of the comparison
- 11: pattern
- 12: prototype pattern
- 13: pedestrian
- 14: activation flow chart
- 15: node
- 16: edge

## Claims

1. Method (1) for automated monitoring of a deep neural network (2), wherein the deep neural network (2) takes input data (3) and generates output data, the output data comprising class membership output scores (4) for the input data (3), the method (1) comprising:
providing a trained deep neural network (2), wherein the deep neural network (2) provides class membership output scores (4) corresponding to a plurality of classes for input data (3);
for each of the classes, generating a class reference information flow graph (5);
providing current input data (6);
providing a current class membership output score (7) for the current input data (6) with the trained deep neural network (2);
generating a current information flow graph (8) based on neural activation values of the deep neural network (2) when providing the current class membership output score (7) for the current input data (6);
obtaining the class reference information flow graph (5) for the class corresponding to the current class membership output score (7);
comparing the current information flow graph (8) to the class reference information flow graph (5) for the class corresponding to the current class membership output score (7); and
assessing a plausibility of the current class membership output score (7) based on the results of the comparison.

2. Method (1) according to claim 1, wherein the deep neural network (2) is a convolutional neural network and the current information flow graph (8) is further based on channel activation values.

3. Method (1) according to claim 1 or 2, wherein the deep neural network (2) is adapted for computer vision, in particular for image classification.

4. Method (1) according to any of claims 1 to 3, wherein for each of the classes, the class reference information flow graph (5) is generated by feeding many input samples (3) that are classified in said class to the trained deep neural network (2) and analyzing the neural activation values and/or channel activation values in the trained deep neural network (2).

5. Method (1) according to any of claims 1 to 4, wherein the class reference information flow graph (5) is chosen as a sub-graph of a computational tree of the deep neural network (2) that only contains channels with neural activation values and/or channel activation values above a predetermined threshold.

6. Method (1) according to any of claims 1 to 5, wherein generating the class reference information flow graph (5) further comprises using a standard windowing approach.

7. Method (1) according to any of claims 1 to 6, wherein comparing the current information flow graph (8) with the class reference information flow graph (5) is performed based on the respective weights of nodes (15) and edges (16) of the information flow graphs (5; 8).

8. Method (1) according to any of claims 1 to 7, wherein, if a deviation of the current information flow graph (8) from the class reference information flow graph (5) for the class corresponding to the current class membership output score (7) exceeds a predetermined threshold, an alarm is output and/or a back-up method is activated.

9. Method (1) according to any of claims 1 to 8, wherein the method (1) further comprises generating human-readable node explanations and comparing the current information flow graph (8) with the class reference information flow graph (5) for the class corresponding to the current class membership output score (7) is based on the node explanations and, in particular, performed by a user.

10. Method (1) according to claim 9, wherein the generation of the node explanations is based on inputs (3) to the deep neural network (2), intermediate outputs of the deep neural network (2) and final outputs of the deep neural network (2).

11. Method (1) according to claim 9 or 10, wherein node explanations related to patterns learned by inner layers of the deep neural network (2) are obtained by inputting a random input into the deep neural network (2) and then optimizing, in particular via a gradient ascent, the random input to maximally activate a unit in the inner layers of the deep neural network (2).

12. Method (1) according to any of claims 9 to 11, wherein node explanations related to the individual classes are obtained by inputting input samples (3) that belong to a specific class to the trained deep neural network (2), determining the neurons and/or layers that get the maximum activation and classifying these neurons and/or layers according to the respective class.

13. Computing system for automated monitoring of a deep neural network (2), wherein the computing system
comprises a trained deep neural network (2), wherein the deep neural network (2) provides class membership output scores (4) corresponding to a plurality of classes for input data (3);
contains class reference information flow graphs (5) for each of the classes; and
is adapted to
provide a current class membership output score (8) for current input data (6) with the trained deep neural network (2);
generate a current information flow graph (8) based on neural activation values of the deep neural network (2) when providing the current class membership output score (7) for the current input data (6);
obtain the class reference information flow graph (5) for the class corresponding to the current class membership output score (7);
compare the current information flow graph (8) to the class reference information flow graph (5) for the class corresponding to the current class membership output score (7); and
assess a plausibility of the current class membership output score (7) based on the results of the comparison.

14. Computing system according to claim 13, wherein the deep neural network (2) is a convolutional neural network and the current information flow graph (8) is further based on channel activation values.

15. Vehicle comprising a computing system according to claim 13 or 14.
